# EUROPEAN PATENT SPECIFICATION

(11) **EP 3 730 694 B1**
(45) Date of publication and mention of the grant of the patent: **11.05.2022**
(21) Application number: 18891381.8
(22) Date of filing: 07.12.2018
(51) Int. Cl.: D21H 17/37, C08F 8/00, C08F 220/22, D21H 19/20, B65D 65/42, D21H 21/16, D21H 27/10

(54) **WATER AND OIL PROOFING COMPOSITION FOR PAPER AND METHOD FOR ITS PRODUCTION, AS WELL AS WATER AND OIL PROOFING PAPER AND METHOD FOR ITS PRODUCTION**
WASSER- UND ÖLBESTÄNDIGE ZUSAMMENSETZUNG FÜR PAPIER, VERFAHREN ZUR HERSTELLUNG DIESER ZUSAMMENSETZUNG, SOWIE WASSER- UND ÖLBESTÄNDIGES PAPIER UND VERFAHREN ZUR HERSTELLUNG DIESES PAPIERS
COMPOSITION D'AGENT HYDROFUGE ET OLÉOFUGE POUR PAPIER AINSI QUE PROCÉDÉ DE FABRICATION DE CELLE-CI, ET PAPIER HYDROFUGE ET OLÉOFUGE AINSI QUE PROCÉDÉ DE FABRICATION DE CELUI-CI

(30) Priority: 18.12.2017 JP 2017241865
(43) Date of publication of application: 28.10.2020
(73) Proprietor: AGC INC., Chiyoda-ku, Tokyo 1008405 (JP)
(72) Inventor: KAWANA, Junsuke, Tokyo 100-8405 (JP); MORIMOTO, Eiji, Tokyo 100-8405 (JP); TAKEMURA, Motohiro, Tokyo 100-8405 (JP); HARA, Hiroyuki, Tokyo 100-8405 (JP)
(74) Representative: Müller-Boré & Partner Patentanwälte PartG mbB
(86) International application number: PCT/JP2018/045141
(87) International publication number: WO 2019/124121

(56) References cited:
- EP-A1- 1 728 806
- EP-A1- 2 468 781
- WO-A1-03/106519
- WO-A1-2011/059039
- WO-A1-2016/027841
- JP-A- H10 310 767
- JP-A- 2001 504 546
- JP-A- 2010 533 230
- JP-A- 2012 219 220
- JP-A- 2013 523 899
- US-A- 4 525 423

## Description

### TECHNICAL FIELD

The present invention relates to a water and oil proofing composition for paper and a method for its production, as well as a water and oil proofing paper and a method for its production.

### BACKGROUND ART

A water and oil proofing paper obtained by treating pulp or paper with a water and oil proofing composition containing a fluorocopolymer having a perfluoroalkyl group (hereinafter referred to also as a "R^{F} group") has barrier properties against a liquid such as water, oil, etc. and thus, is used for e.g. food packaging containers, food wrapping paper, etc. Further, the water and oil proofing paper has good water resistance and oil resistance while having air permeability, and therefore, it is used also as a packaging paper for fries which dislike moisture confined in the interior, as a freshness keeping agent packaging paper which functionally requires air permeability, or as a deoxidizer packaging paper.

As a method for treating pulp or paper with the water and oil proofing composition, there are the following two types of methods.
(1) A method so-called "internal addition", in which a pulp slurry having the water and oil proofing composition added, is subjected to papermaking.
(2) A method so-called "external addition" in which at the time of the size pressing after papermaking, wet-pressing and preceding dryer, the water and oil proofing composition is applied to the paper, or after papermaking of the base paper, the water and oil proofing composition is applied to the paper by using various coaters or various printing machines.

As the water and oil proofing composition containing a fluorocopolymer, the following one is known.

A water and oil proofing composition, in which a fluorocopolymer comprising from 60 to 98 mass% of units based on a monomer having a R^{F} group with at most 6 carbon atoms, from 1 to 30 mass% of units based on a monomer having a dialkylamino group, and from 1 to 20 mass% of units based on a monomer having an oxyalkylene group, is dispersed in an aqueous medium, as dialkylamino groups in the fluorocopolymer are salified by an acid (Patent Document 1).

### PRIOR ART DOCUMENT

### PATENT DOCUMENT

Patent Document 1: WO 2005/090423

### DISCLOSURE OF INVENTION

### TECHNICAL PROBLEM

However, a water and oil proofing paper obtained by treating pulp or paper with the water and oil proofing composition of Patent Document 1 may sometimes be insufficient in oil resistance. For example, in a case where the water and oil proofing composition is internally added to a pulp slurry having a high pH, the obtained water and oil proofing paper is insufficient in oil resistance.

The present invention is to provide a water and oil proofing composition for paper which is excellent in water dispersion stability of the fluorocopolymer and which is, at the same time, capable of obtaining a water and oil proofing paper excellent in oil resistance, and a method for its production, as well as a water and oil proofing paper excellent in oil resistance, and a method for its production.

### SOLUTION TO PROBLEM

The present invention has the following embodiments.
<1> A water and oil proofing composition for paper, which is a composition comprising water and a salified fluorocopolymer dispersed in the water, characterized in that
   the fluorocopolymer before being salified, is a copolymer which has units based on the following monomer (a), units based on the following monomer (b) and units based on the following monomer (c), which comprises from 74 to 80 mass% of units based on the following monomer (a), from 3 to 5 mass% of units based on the following monomer (b) and from 17 to 21 mass% of units based on the following monomer (c), in all monomer units, and of which the mass average molecular weight is from 80,000 to 300,000:
   Monomer (a): a compound represented by the following formula (1),

      CH₂=C(CH₃)C(O)OCH₂CH₂(CF₂)₆F (1),
   Monomer (b): a compound represented by the following formula (2),

      CH₂=C(CH₃)C(O)OCH2CH₂N(CH₃)₂ (2),
   Monomer (c): a compound represented by the following formula (3),

      CH₂=CHC(O)OCH₂CH₂OH (3),
   and the salified fluorocopolymer is the above copolymer in which at least some of dimethylamino groups in units based on the above monomer (b) are salified by an acid.
<2> The composition according to <1>, wherein the fluorocopolymer before being salified has no units based on a monomer having an alkyl group with at least 4 carbon atoms.
<3> The composition according to <1> or <2>, wherein the fluorocopolymer before being salified, is a copolymer which comprises from 75 to 79 mass% of units based on the monomer (a), from 3 to 5 mass% of units based on the monomer (b) and from 18 to 20 mass% of units based on the monomer (c).
<4> The composition according to any one of <1> to <3>, wherein the glass transition temperature of the fluorocopolymer before being salified, is at most 50°C.
<5> The composition according to any one of <1> to <4>, wherein the content of an organic solvent in the composition is at most 30 mass% in the total amount of the composition.
<6> The composition according to any one of <1> to <5>, wherein the fluorocopolymer has no units based on a monomer represented by the following monomer (4):

   CH₂=C(R¹)-G-(R²O)_{q}-R³ (4)

   wherein R¹ is a hydrogen atom or a methyl group; G is a group represented by the following formula (5-1) or formula (5-2); R² is an alkylene group with from 2 to 4 carbon atoms, and two or more alkylene groups different in the number of carbon atoms may be contained in one molecule; q is an integer of from 3 to 50; R³ is a hydrogen atom, a methyl group, an acryloyl group, a methacryloyl group or an allyl group;

   -C(O)O-(CH₂)ᵣ- (5-1)

   -C(O)O-(CH₂)ᵣ-NHC(O)O- (5-2)

   wherein r is an integer of from 0 to 4.
<7> The composition according to any one of <1> to <6>, wherein the fluorocopolymer has no units based on a monomer having a group reactive with a hydroxy group.
<8> The composition according to any one of <1> to <7>, wherein the composition contains no compound having a group reactive with a hydroxy group.
<9> A water and oil proofing paper made of a paper obtained from a pulp slurry to which the composition as defined in any one of <1> to <8> is added.
<10> A water and oil proofing paper made of a paper treated with the composition as defined in any one of <1> to <8>.
<11> A method for producing a water and oil proofing paper, characterized by making a paper by adding to a pulp slurry the composition as defined in any one of <1> to <8>.
<12> A method for producing a water and oil proofing paper, characterized by applying the composition as defined in any one of <1> to <8> to the surface of a paper, followed by drying.
<13> A method for producing a water and oil proofing composition for paper, characterized by
   polymerizing a monomer mixture comprising from 74 to 80 mass% of the following monomer (a), from 3 to 5 mass% of the following monomer (b) and from 17 to 21 mass% of the following monomer (c), in an organic solvent, to produce an organic solvent solution of a fluorocopolymer, of which the mass average molecular weight is from 80,000 to 300,000,
   then, mixing an acid and water to the obtained organic solvent solution of the fluorocopolymer, to salify at least some of dimethylamino groups in units based on the monomer (b) in the fluorocopolymer, by the acid,
   further removing the organic solvent from the mixture containing the salified fluorocopolymer, the organic solvent and water, to obtain a composition comprising water and the salified fluorocopolymer dispersed in the water:
      Monomer (a): a compound represented by the following formula (1),

         CH₂=C(CH₃)C(O)OCH₂CH₂(CF₂)₆F (1),
      Monomer (b): a compound represented by the following formula (2),

         CH₂=C(CH₃)C(O)OCH2CH₂N(CH₃)₂ (2),
      Monomer (c): a compound represented by the following formula (3),

         CH₂=CHC(O)OCH₂CH₂OH (3).
<14> The production method according to <13>, which comprises filling a closed container having a gas outlet, with the mixture containing the salified fluorocopolymer, the organic solvent and water, to form a liquid phase and a gas phase in the closed container,
   then, forming a part of the liquid in the liquid phase into small droplets and bringing the small droplets into contact with the gas phase, to vaporize the organic solvent in the small droplets, and discharging the gas in the gas phase containing the vaporized organic solvent, from the gas outlet of the closed container, to remove the organic solvent in the liquid phase.

### ADVANTAGEOUS EFFECTS OF INVENTION

According to the water and oil proofing composition for paper of the present invention, it is excellent in water-dispersion stability of the fluorocopolymer and is, at the same time, capable of obtaining a water and oil proofing paper excellent in oil resistance.

According to the method for producing a water and oil proofing composition for paper of the present invention, it is possible to produce a water and oil proofing composition for paper, which is excellent in water-dispersion stability of the fluorocopolymer and which is, at the same time, capable of obtaining a water and oil proofing paper excellent in oil resistance.

The water and oil proofing paper of the present invention is excellent in oil resistance.

According to the method for producing a water and oil proofing paper of the present invention, it is possible to produce a water and oil proofing paper excellent in oil resistance.

### DESCRIPTION OF EMBODIMENTS

A "unit based on a monomer" is a general term for an atomic group which is directly formed by polymerization of one molecule of the monomer, and an atomic group which is obtainable by chemically converting a part of the atomic group.

A "(meth)acrylate" is a general term for an acrylate and a methacrylate.

The number-average molecular weight and mass-average molecular weight of a fluorocopolymer, are polymethyl methacrylate equivalent molecular weights obtainable by measurement by gel permeation chromatography by using a calibration curve prepared by using standard polymethyl methacrylate samples.

The glass transition temperature of a fluorocopolymer is an intermediate point glass transition temperature, measured by a differential scanning calorimetry (DSC) method in accordance with JIS K 7121-1987 (corresponding to International Standard ISO 3146).

### <Water and oil proofing composition for paper>

The water and oil proofing composition for paper of the present invention is a composition comprising water and a salified fluorocopolymer dispersed in the water, characterized in that the fluorocopolymer before being salified is a copolymer which has units based on the monomer (a), units based on the monomer (b) and units based on the monomer (c) in specific proportions and which has a specific mass average molecular weight, and the salified fluorocopolymer is the above copolymer wherein at least some of dimethylamino groups in units based on the monomer (b) are salified by an acid. The water and oil proofing composition for paper of the present invention may contain components other than the above salified fluorocopolymer, as the case requires.

Hereinafter, the water and oil proofing composition for paper of the present invention will be referred to also as "composition X", and the fluorocopolymer before being salified, will be referred to also as "copolymerA". Further, the salified fluorocopolymer may be referred to also as "salified copolymer A".

Further, hereinafter, units based on the monomer (a) will be referred to also as "units (a)", units based on the monomer (b) will be referred to also as "units (b)", and units based on the monomer (c) will be referred to also as "units (c)". Further, a monomer which is other than the monomer (a), the monomer (b) and the monomer (c), and which is copolymerizable with the monomer (a), etc., will be referred to as a "monomer (d)", and units based on the monomer (d) will be referred to as "units (d)".

### (Copolymer A)

The copolymer A has units (a), units (b) and units (c) and may have units (d) as the case requires. When the copolymer A has units (d), the copolymer A may have two or more types of units (d).

The monomer (a) is a monomer having a R^{F} group with 6 carbon atoms, as represented by the above formula (1).

Units (a) are units that bring about to the copolymer A the effect of imparting primarily water and oil resistance to the water and oil proofing paper.

In a case where in the copolymer A, units (a) are replaced by units based on another R^{F} group-containing monomer, for example, by units based on CH₂=CHC(O)OCH₂CH₂(CF₂)₆F, oil resistance of the water and oil proofing paper which the fluorocopolymer brings about, will be lowered. Thus, in the present invention, units (a) are essential as R^{F} group-containing units in the copolymer A.

The monomer (b) is a monomer having a dimethylamino group, as represented by the above formula (2).

Units (b) are units that bring about an effect to improve mainly the water dispersion stability of the copolymer A by being salified. Further, they are also units that bring about an effect to improve the affinity to pulp.

In a case where in the copolymer A, units (b) are replaced by units based on another dialkylamino group-containing monomer, for example, by units based on CH₂=C(CH₃)C(O)OCH₂CH₂N(CH₂CH₃)₂, the water dispersion stability of the fluorocopolymer will be lowered. Thus, in the present invention, units (b) are essential as the dialkylamino group-containing units in the copolymer A.

Further, in order to improve the water dispersion stability and affinity to pulp of the copolymer A, it is essential that at least some of dimethylamino groups in units (b) are in a state of being salified by an acid. In a case where units (b) are not in a state of being salified by an acid, the water dispersion stability or affinity to pulp of the copolymer A will be significantly lowered, and the effects of the present invention will be impaired.

To bring units (b) to be in a state of being salified by an acid, the copolymer A may be reacted with an acid at the time of being dispersed in water.

In order to improve the water dispersion stability and affinity to pulp of the copolymer A, some of dimethylamino groups in units (b) may be oxidized. When dimethylamino groups are oxidized, they will not be in a state of being salified by an acid, but in a case where some of dimethylamino groups are oxidized, dimethylamino groups not-oxidized can be made to be in a state of being salified by an acid.

The monomer (c) is a monomer having a hydroxy group, as represented by the above formula (3).

Units (c) are units that bring about, together with the effect to improve the water dispersion stability of the copolymer A by hydroxy groups, the effects to soften the main chain of the copolymer A, to lower the glass transition temperature, and to improve the oil resistance of the water and oil proofing paper.

In order for the water and oil proofing paper to maintain high oil resistance and water dispersibility, it is preferred that the hydroxy groups in units (c) are not converted to other groups, or are not used in a crosslinking reaction. When the hydroxy groups are not used in a crosslinking reaction, the flexibility of the main chain of the copolymer A will be maintained, and the oil resistance of the water and oil proofing paper will be maintained.

It is preferred that the copolymer A has no units based on a monomer having a group reactive with a hydroxy group. The monomer having a group reactive with a hydroxy group may, for example, be a monomer having a blocked isocyanate group, an alkoxysilyl group, or a glycidyl group.

In a case where in the copolymer A, units (c) are replaced by units based on another hydroxy group-containing monomer, for example, by units based on CH₂=C(CH₃)C(O)OCH₂CH₂OH, the water-dispersion stability of the fluorocopolymer or the oil resistance of the water and oil proofing paper will be lowered. Thus, in the present invention, units (c) are essential as the hydroxy group-containing units in the copolymer A.

The monomer (d) may, for example, be an olefin (such as ethylene), a fluoromonomer (such as vinylidene fluoride), a vinyl ester (vinyl acetate, vinyl propionate, vinyl isobutanoate, vinyl isodecanoate, vinyl stearate, etc.), a vinyl ether (cetyl vinyl ether, dodecyl vinyl ether, isobutyl vinyl ether, ethyl vinyl ether, 2-chloroethyl vinyl ether, etc.), an aromatic vinyl (styrene, α-methyl styrene, p-methyl styrene, etc.), N-vinylpyrrolidone, an amide group-containing monomer ((meth)acrylamide, N,N-dimethyl (meth)acrylamide, diacetone (meth)acrylamide, methylolated (meth)acrylamide, methylolated diacetone (meth)acrylamide, etc.), a vinyl alkyl ketone, a diene (butadiene, isoprene, chloroprene, etc.), (meth)acrylic acid, a (meth)acrylate (benzyl (meth)acrylate, a (meth)acrylate having polysiloxane, N,N-diethylaminoethyl (meth)acrylate, 2-hydroxyethyl methacrylate, diethylene glycol mono(meth)acrylate, ethylene glycol di(meth)acrylate, etc.), an allyl ester (allyl acetate, etc.), N-vinyl carbazole, or an imido group-containing monomer (maleimide, N-methylmaleimide, etc.).

As the monomer (d), two or more types may be used in combination.

As the monomer (d), N-vinylpyrrolidone, diethylene glycol mono(meth)acrylate, or ethylene glycol di(meth)acrylate is preferred, and diethylene glycol monoacrylate, or ethylene glycol diacrylate is more preferred.

It is preferred that the copolymer A does not have, as units (d), units based on a monomer having an alkyl group with 4 or more carbon atoms. When the copolymer A does not have units based on a monomer having an alkyl group with 4 or more carbon atoms, the oil resistance of the water and oil proofing paper is less likely to be lowered. A fluorocopolymer having units based on a monomer having an alkyl group with 4 or more carbon atoms, has water repellency, such being effective when a high water repellency is required. On the other hand, the alkyl group with 4 or more carbon atoms has a high lipophilicity, whereby the oil resistance of the fluorocopolymer tends to be lowered. That is, since there is a tendency that the oil resistance is impaired, the copolymer A preferably does not have units based on a monomer having an alkyl group with 4 or more carbon atoms.

The copolymer A preferably does not have, as units (d), units based on vinylidene chloride and units based on vinyl chloride, and more preferably does not have units based on a chlorine-containing monomer. When the copolymer A does not have units based on a chlorine-containing monomer, at the time when the water and oil proofing paper is used as a food wrapping paper, it is possible to prevent food contamination due to generation of hydrochloric acid.

It is preferred that the copolymer A does not have, as units (d), units based on a monomer represented by the following formula (4). When copolymer A does not have units based on a monomer represented by the following formula (4), a solution of the copolymer A is less likely to be gelled.

CH₂=C(R¹)-G-(R²O)_{q}-R³ (4)

Here, R¹ is a hydrogen atom or a methyl group, G is a group represented by the following formula (5-1) or a group represented by the following formula (5-2), R² is an alkylene group with from 2 to 4 carbon atoms, wherein two or more alkylene groups different in the number of carbon atoms may be contained in one molecule, q is an integer of from 3 to 50, and R³ is a hydrogen atom, a methyl group, a (meth)acryloyl group or an allyl group.

-C(O)O-(CH₂)ᵣ- (5-1)

-C(O)O-(CH₂)ᵣ-NHC(O)O- (5-2)

wherein r is an integer of from 0 to 4.

The monomer represented by the formula (4) may, for example, be polyethylene glycol mono(meth)acrylate, polypropylene glycol mono(meth)acrylate, methoxy polyethylene glycol (meth)acrylate, polyethylene glycol di(meth)acrylate, polypropylene glycol di(meth)acrylate, etc. However, the average repeating number of the ethylene glycol in the above polyethylene glycol derivative is 3 or more.

The proportion of units (a) in the copolymer A is from 74 to 80 mass%, more preferably from 75 to 79 mass%, to the total amount of all units in the copolymer A. When the proportion of units (a) is at least the lower limit value in the above range, it is possible to obtain from the copolymer A a water and oil proofing paper which is excellent in water resistance and oil resistance. When the proportion of units (a) is at most the upper limit value in the above range, water dispersion stability of the copolymer A will be excellent.

The proportion of units (b) in the copolymer A is from 3 to 5 mass% to the total amount of all units in the copolymer A. When the proportion of units (b) is at least the lower limit value in the above range, water dispersion stability of the copolymer A will be excellent. When the proportion of units (b) is at most the upper limit value in the above range, it is possible to obtain from the copolymer A a water and oil proofing paper which is excellent in water resistance and oil resistance.

The proportion of units (c) in the copolymer A is from 17 to 21 mass%, more preferably from 18 to 20 mass%, to the total amount of all units in the copolymer A. When the proportion of units (c) is at least the lower limit value in the above range, the water dispersion stability and affinity to pulp of the copolymer A will be excellent. When the proportion of units (c) is at most the upper limit value in the above range, it is possible to obtain from the copolymer A a water and oil proofing paper which is excellent in water resistance and oil resistance.

The proportion of units (d) in the copolymer A is preferably from 0 to 4 mass%, more preferably from 0 to 1 mass%, to the total amount of all units in the copolymer A. When the proportion of units (d) is within the above range, it is possible to obtain a water and oil proofing paper which is excellent in water resistance and oil resistance. However, in a case where the copolymer A has units (d), such units (d) are preferably units (d) other than the units (d) which are said to be preferably not contained in the copolymer A.

The proportions of units (a), units (b) and units (c) (units (a)/units (b)/units (c)) in the copolymer A are from 74 a to 80 mass%/from 3 to 5 mass%/from 17 to 21 mass%, more preferably from 75 to 79 mass%/from 3 to 5 mass%/from 18 to 20 mass%, to the total amount of all units in the copolymer A. When the proportions of the respective units are within the above ranges, it is possible to obtain from the copolymer A a water and oil proofing paper which is excellent in water resistance and oil resistance.

The proportions of units based on the respective monomers are obtained from the NMR (nuclear magnetic resonance) analysis and elemental analysis. In a case where they cannot be obtained from the NMR analysis and elemental analysis, they may be calculated based on the charged amounts of the monomers at the time of preparation of the copolymer A.

The mass average molecular weight of the copolymer A is from 80,000 to 300,000, preferably from 90,000 to 200,000. When the mass average molecular weight of the copolymer A is at least the lower limit value in the above range, the water dispersion stability of the copolymer A will be more excellent. Further, it is possible to obtain a water and oil proofing paper which is further excellent in water and oil resistance. When the mass average molecular weight of the copolymer A is at most the upper limit value in the above range, it is possible to obtain a water and oil proofing paper which is further excellent in water and oil resistance.

In the copolymer A, the proportion of units (b) contributing mainly to the water dispersion stability is relatively small, but, by adjusting the molecular weight of the copolymer A to be within the specific range, the water dispersion stability of the copolymer A is improved.

The glass transition temperature of the copolymer A is preferably at most 50°C, more preferably at most 40°C, further preferably at most 35°C. When the glass transition temperature of the copolymer A is at most the upper limit value in the above range, it is possible to obtain a water and oil proofing paper which is excellent in water resistance and oil resistance. In particular, in a case where the composition X is internally added to a pulp slurry having a high pH, it is possible to obtain a water and oil proofing paper which is excellent in water resistance and oil resistance.

The glass transition temperature of the copolymer A should better be lower, and the lower limit is not particularly limited, but from such a viewpoint that production of the copolymer A will be easy, the lower limit of the glass transition temperature of the copolymer A is usually -10°C.

### (Acid)

The composition X comprises water and a salified copolymer A. The salified copolymer A is one in which at least some of dimethylamino groups in units (b) in the copolymer A have been salified with an acid.

The acid to salify dimethylamino groups in units (b) in the copolymer A, may be an inorganic acid or an organic acid. As the acid, from the viewpoint of the effect for water dispersion of the copolymer A, an organic acid is preferred.

The inorganic acid may, for example, be hydrochloric acid, hydrobromic acid, sulfonic acid, nitric acid, or phosphoric acid.

The organic acid may, for example, be acetic acid, formic acid, propionic acid, lactic acid, citric acid, malic acid, itaconic acid, tartaric acid, fumaric acid, succinic acid, adipic acid, oxalic acid, maleic acid, or trifluoroacetic acid. As the organic acid, from the viewpoint of water dispersibility and safety, acetic acid, lactic acid, or malic acid is preferred, and acetic acid is more preferred.

### (Water)

The amount of water contained in the composition X is preferably from 150 to 100,000 parts by mass, more preferably from 150 to 1,000 parts by mass, to 100 parts by mass of the copolymer A.

### (Organic solvent)

The composition X may contain an organic solvent. As described below, the copolymer A is preferably produced by polymerizing a monomer in an organic solvent, and removing the organic solvent from the obtained solution of the copolymer A. Thus, in the composition X obtainable by using the copolymer A produced by such a production method, it is not uncommon that the residual organic solvent is present. As long as the organic solvent is one that may affect the human body, the presence of the organic solvent in the composition X should better be small.

The content of the organic solvent in the composition X is preferably at most 30 mass%, more preferably at most 5 mass%, further preferably at most 1 mass%, to the total amount of the composition X. An organic solvent may affect the human body, and therefore, if an organic solvent is contained much in the composition X, such is undesirable not only for the food contact applications, but also in a case where the organic solvent evaporates in the process for producing a water and oil proofing paper.

As the organic solvent to be contained in the composition X, a polymerization solvent as described later may be mentioned.

### (Compound having a group reactive with a hydroxy group)

As described above, in the composition X, it is preferred that hydroxy groups which the copolymer A has, will not be converted to other groups, or will not be used in the crosslinking reaction. Thus, it is preferred that the composition X contains no compound having a group reactive with a hydroxy group.

The compound having a group reactive with a hydroxy group may, for example, be a compound having an isocyanate group, a blocked isocyanate group, an alkoxysilyl group, or a glycidyl group. Specific examples of the compound having a group reactive with a hydroxy group may, for example, be a melamine resin, a urethane resin, a triazine ring-containing compound, and a compound having an isocyanate group.

By not containing a compound having a group reactive with a hydroxy group, even after being processed into paper, the flexibility of the main chain of the copolymer A will be maintained, and the oil resistance of the water and oil proofing paper will be high.

Further, compounds such as polyamide epichlorohydrin resins, polyamine epichlorohydrin resins, polyamidoamine epichlorohydrin resins, polyvinyl alcohol resins, starches, polyacrylamide resins, etc. will mainly act on enhanced binding between pulp by forming hydrogen bonds with hydroxy groups, and will not inhibit the oil resistance of the water and oil proofing paper, but will contribute to improvement of the water resistance and wet strength of the water and oil proofing paper, whereby they may be used in a process for producing a water and oil proofing paper. These compounds are ones that show interaction by hydrogen bonding with hydroxy groups and do not correspond to the compound having a group capable of reacting with a hydroxy group. In the process for producing a water and oil proofing paper, these compounds may be included in the composition X.

### <Use of oil proofing composition for paper>

The composition X is an oil proofing composition to be used for paper. Paper is one obtained by subjecting a pulp slurry having pulp dispersed in water, to addition of various drugs or to treatment such as beating, followed by paper making by using a wire mesh, and then by dehydration and drying. The specific form of paper may, for example, be one of an elongated sheet form which is continuously produced by a continuous paper making machine, one of a paper sheet form obtained by cutting it, or a three-dimensional molded body (a container, etc.) which is batch-produced by a pulp molding machine.

As a method for producing a water and oil proofing paper by treating pulp or paper with the water and oil proofing composition, there are two methods, i.e. a method so-called "internal addition" in which a pulp slurry having the water and oil proofing composition added, is subjected to paper making, and a method so-called "external addition" in which in a size press after paper making, wet pressing, and prestage dryer, the water and oil proofing composition is applied to the paper, followed by drying, or after the base paper papermaking, by using various coaters or various printing machines, the water and oil proofing composition is applied on the paper, followed by drying. Using the composition X, a water and oil proofing paper can be produced by either one of these two methods.

### (Internal addition)

As a raw material of pulp at the time of using the composition X in the internal addition, a fresh pulp obtained by pulping by using wood (softwood, hardwood, etc.), or a plant (bagasse, rice straw, bamboo, reed, coconut husk, etc.), and a recycled pulp using waste paper, may be mentioned. The fresh pulp is called by different names depending on the production process, and, for example, kraft pulp, sulfite pulp, soda pulp, mechanical pulp, thermomechanical pulp, and chemi-thermomechanical pulp, may be mentioned. Among them, from such a viewpoint that it will be easy to let the oil resistance of the water and oil proofing paper be exhibited, in the case of using wood as a raw material, kraft pulp, thermomechanical pulp or chemi-thermomechanical pulp, is preferred, or in a case of using a plant as a raw material, sulfite pulp or soda pulp is preferred.

These pulps may be ones prepared by combining steps of maceration, dust removing, bleaching, deinking, etc. as the case requires. As pulp, two or more types may be used as mixed in any optional ratio.

In the case of using the composition X by internal addition, the composition X is added to a pulp slurry, prior to papermaking the pulp slurry. The addition amount of the composition X (solid content) is preferably from 0.1 to 2.0% to the dry weight of the pulp. When the addition amount is at least 0.1%, water and oil resistance tends to be sufficiently exhibited. When the addition amount is at most 2.0%, dewatering properties will be better, and it tends to be easy to prepare paper.

Before papermaking a pulp slurry, in addition to the composition X, a sizing agent, a coagulant, a dry paper strength agent, a yield improving agent, a wet paper strength agent, a pH adjusting agent, a dye, a filler, etc. may be added to the pulp slurry. Further, beating treatment may be conducted prior to papermaking the pulp slurry.

### (External addition)

At the time of using the water and oil proofing composition for paper by external addition, the raw material and the production method for pulp are the same as in the case of the internal addition. Further, in the same manner as in the case of the internal addition, prior to papermaking a pulp slurry, a sizing agent, a coagulant, a dry paper strength agent, a yield improving agent, a wet paper strength agent, a pH adjusting agent, a dye, a filler, etc. may be added to the pulp slurry. Further, prior to papermaking the pulp slurry, beating treatment may be conducted.

In the case of using the composition X in the external addition, the composition X is applied to paper, followed by drying, by means of a size press, various coaters or various printing machines.

In the case of using the composition X in the external addition, it is preferred that the composition X is diluted so that the solid content concentration becomes to be from 0.01 to 3.0 mass%, to obtain a coating solution. When the concentration is at least 0.01 mass%, the water and oil resistance of the water and oil proofing paper tends to be sufficiently exhibited. When the concentration is at most 3.0 mass%, the viscosity will be less likely to be too high, and processing will be facilitated.

After applying the composition X, the paper substrate is dried. The drying method may be a method of drying by heat, or a method of drying without applying heat (air-drying).

At the time of externally adding the composition X, to the composition X, another agent, pigment or solvent may be added. Another agent may, for example, be a surface paper strength agent, a sizing agent, a penetrating agent, a defoamer, a chelating agent, a dye, a binder, a pH modifier, a viscosity modifier, a sulfate, etc.

The surface paper strength agent may, for example, be an enzyme modified starch, a hydroxyethyl etherified starch, a phosphoric acid esterified starch, an oxidized starch, an amphoteric starch, a cationic starch, a raw starch, polyvinyl alcohol, a polyacrylamide resin, a polyamide amine resin, a polyamidoamine epichlorohydrin resin, a condensates or precondensate of urea or melamine formaldehyde, a methylol-dihydroxy ethylene-urea or its derivative, urone, methylol-ethylene-urea, methylol-propylene-urea, methylol-triazone, a condensate of dicyandiamide-formaldehyde, etc.

The sizing agent may, for example, be rosin, various modified rosins, a alkyl ketene dimer, an alkenyl succinic anhydride, a styrene type polymer, an acrylic polymer, wax, etc.

In the case of using the composition X in the external addition, it is preferred that by using a non-sized base paper not using an internal sizing agent, the composition X is permitted to permeate to the interior of the paper. On the other hand, in the base paper treated with an internal sizing agent, the composition X cannot be permeated, whereby the performance will not be exhibited. In such a case, to facilitate the permeation, it is preferred to use a penetrant or solvent in combination, and it is more preferred to use a penetrant from the viewpoint of safety.

The penetrant may, for example, be a dendrimeric alcohol type penetrating agent, or an acetylene glycol type penetrating agent. As the penetrant, an acetylene glycol type penetrating agent is more preferred from the viewpoint of less adverse effects on water resistance.

The measuring weight of the water and oil proofing paper obtained by treating pulp or paper with the composition X, is, for example, from 10 to 500 g/m².

In order to optimize the water and oil proofing paper for the actual food packaging applications, various processings such as coating, printing, punching, gluing, box making, etc. may further be applied thereto.

### <Method for producing the water and oil proofing composition for paper>

The composition X is produced by producing a copolymer A by polymerizing a mixture of the above-mentioned monomers by a solution polymerization method, a suspension polymerization method, an emulsion polymerization method or the like, and then, salifying the obtained copolymer A and at the same time, dispersing the salified copolymer A in water.

It is preferred that the salifying and dispersion in water of the copolymer A are carried out by adding an aqueous acid solution to a hydrophilic organic solvent solution of the copolymer A for salifying it, and subsequently removing the hydrophilic organic solvent.

It is preferred to carry out the polymerization of the monomers by a solution polymerization method using an organic solvent from the viewpoint of polymerization stability, and from such a viewpoint that it will be easy to carry out salifying and dispersion in water of the copolymer A, it is preferred to use, as the organic solvent, a hydrophilic organic solvent.

As a method for producing the composition X, a method is preferred, in which the monomer mixture is polymerized in an organic solvent to prepare an organic solvent solution of the copolymer A, then, the obtained organic solvent solution of the copolymer A, an acid and water are mixed to salify at least some of dimethylamino groups in the copolymer A by the acid, and further, the organic solvent is removed from the mixture comprising the salified copolymer A, the organic solvent and water, to obtain a composition comprising water and the salified copolymer A dispersed in the water.

In the solution polymerization method, the monomer mixture is polymerized in a polymerization solvent in the presence of a polymerization initiator. In the solution polymerization method, a chain transfer agent may be used as the case requires. At the time of the polymerization, it is preferred not to use a surfactant.

As the polymerization solvent, for example, the following compounds may be mentioned.

A ketone (acetone, methyl ethyl ketone, methyl isobutyl ketone, etc.), an alcohol (isopropyl alcohol, etc.), diacetone alcohol, an ester (ethyl acetate, butyl acetate, etc.), an ether (diisopropyl ether, etc.), an aliphatic hydrocarbon, an aromatic hydrocarbon, a halogenated hydrocarbon (perchloroethylene, trichloro-1,1,1-ethane, trichlorotrifluoroethane, dichloropentafluoropropane, etc.), N,N-dimethylformamide, N-methyl-2-pyrrolidone, butyloacetone, dimethyl sulfoxide, and glycol ether.

As the polymerization solvent, two or more types may be used in combination.

In the solution polymerization method, as the polymerization solvent, an organic solvent is preferred, and since it will be easy to disperse the copolymer A in water, a hydrophilic organic solvent is more preferred. The hydrophilic organic solvent is meant for a solvent having high compatibility with water, and for example, a ketone (acetone, methyl ethyl ketone, etc.), an alcohol (methanol, ethanol, 2-propanol, etc.), an ester (ethyl acetate, etc.), tetrahydrofuran, etc. may be mentioned. As the hydrophilic organic solvent, from the viewpoint of the solubility of the respective monomers, a ketone is preferred, and acetone or methyl ethyl ketone is particularly preferred.

As the polymerization initiator, for example, ammonium persulfate, potassium persulfate, a peroxide, or an azo compound may be mentioned.

The peroxide may, for example, be benzyl peroxide, lauryl peroxide, succinyl peroxide, or tert-butyl peroxypivalate.

The azo compound may, for example, be dimethyl-2,2'-azobis(2-methyl propionate), 2,2'-azobis(2-methylbutyronitrile), 4,4'-azobis(4-cyanovaleric acid), 2,2'-azobis(4-methoxy-2,4-dimethylvaleronitrile), 2,2'-azobis(2,4-dimethylvaleronitrile), 2,2'-azobis(2,4-dimethylvaleronitrile), 2,2'-azobis(2-methylbutyronitrile), 2,2'-azobis[2-(2-imidazolin-2-yl)propane], 2,2'-azobisisobutyronitrile, 1,1'-azobis(2-cyclohexane-1-carbonitrile), or 2,2'-azobis{2-methyl-N-[1,1-bis(hydroxymethyl)-2-hydroxyethyl]propionamide). From the viewpoint of reactivity of the monomers, as the peroxide, tert-butyl peroxypivalate is particularly preferred, and as the azo compound, dimethyl-2,2'-azobis(2-methyl propionate) is preferred.

The chain transfer agent may, for example, be an alkyl mercaptan (tert-dodecyl mercaptan, n-dodecyl mercaptan, stearyl mercaptan, etc.), aminoethanethiol, mercaptoethanol, thioglycolic acid, 3-mercaptopropionic acid, or 2,4-diphenyl-4-methyl-1-pentene. It is preferred not to use a chain transfer agent, since it will be thereby easy to suppress an oligomer component with a low degree of polymerization.

In the production of the copolymer A by the solution polymerization, the composition of the monomer mixture to be polymerized is preferably a composition corresponding to the unit composition of the copolymer A to be obtained. That is, by copolymerizing a monomer mixture comprising from 74 to 80 mass% of the monomer (a), from 3 to 5 mass% of the monomer (b) and from 17 to 21 mass% of the monomer (c), it is preferred to produce a copolymer A having the above-mentioned unit composition and the above-mentioned mass average molecular weight.

The concentration of the monomer mixture is preferably from 5 to 70 mass%, more preferably from 10 to 60 mass%, in all raw materials (including a solvent).

The amount of the polymerization initiator is preferably from 0.1 to 3.0 parts by mass, to 100 parts by mass of the monomer mixture.

The amount of the chain transfer agent is preferably from 0 to 1 part by mass, to 100 parts by mass of the monomer mixture.

The polymerization temperature is, from the viewpoint of using the polymerization initiator efficiency, preferably at least the half-life temperature of the polymerization initiator, more preferably from 30 to 90°C.

The organic solvent solution containing the copolymer A after polymerization, an acid and water are mixed, to salify at least some of dimethylamino groups in the copolymer A by the acid, and to disperse the copolymer A in a mixed medium of the organic solvent and water. Hereinafter, this mixture containing the salified copolymer A, the organic solvent and water will be referred to also as the "dispersion".

To the organic solvent solution containing the copolymer A, the acid and water may be added, or to the mixed medium of the acid and water, the organic solvent solution containing the copolymer A may be added.

The amount of the acid to be used at the time of mixing is preferably from 0.1 to 20 equivalents, more preferably from 0.5 to 10 equivalents, to the amount of units (b) in the copolymer A, i.e. the amount of dimethylamino groups, from the viewpoint of the water dispersion stability and affinity to pulp of the copolymer A.

The amount of water to be used in salifying (excluding water for dilution) is preferably from 200 to 1,000 parts by mass, particularly preferably from 200 to 600 parts by mass, to 100 parts by mass of the copolymer A, from the viewpoint of dispersion stability in water of the copolymer A.

In the case of oxidizing dimethylamino groups in units (b) as described above, oxidation may be conducted by mixing hydrogen peroxide after the salifying or after removal of the organic solvent.

As mentioned above, in the composition X, the content of the organic solvent is preferably at most 30 mass%, more preferably at most 5 mass%, further preferably at most 1 mass%. The above-mentioned dispersion contains an organic solvent such as the polymerization solvent used at the time of producing the copolymer A, and it is preferred to remove it until the content of the organic solvent becomes to be at most the predetermined value.

The method for removing the organic solvent from the dispersion may be a method of e.g. stripping (volatilization) treatment, distillation, bubbling or the like.

Especially in the case where the organic solvent is a hydrophilic organic solvent, from such a viewpoint that it is possible to efficiently remove the organic solvent, it is preferred to remove the organic solvent from the dispersion by the following method.

A method in which the dispersion is filled in a sealed container having a gas outlet port, to form a liquid phase and a vapor phase in the sealed container, and a portion of the liquid in the liquid phase is formed into small droplets and permitted to contact with the gas phase to let the organic solvent in the small droplets be vaporized, and at the same time, the gas in the gas phase containing the vaporized organic solvent, is withdrawn from the gas outlet port of the sealed container, to reduce the amount of the organic solvent in the liquid phase. Here, the small droplets are liquid droplets having a particle size of at most 1,000 µm.

In order to let a portion of the liquid of the liquid phase be formed into small droplets and permitted to contact with the gas phase, it is preferred that a circulation system for circulating the liquid of the liquid phase is provided inside or outside of the closed container, so that by the circulation system, a portion of the liquid of the liquid phase is taken out and, by adjusting the temperature of the liquid, formed into small droplets and discharged in the gas phase. In particular, it is more preferred that the closed container is provided with a liquid outlet port to take out the liquid of the liquid phase and a liquid inlet to introduce the liquid into the gas phase, and the circulation system is made to be an external circulation system formed between the liquid outlet port and the liquid inlet, whereby the external circulation system has a means for adjusting the temperature and pressure of the liquid in the circulation system. By adjusting the temperature and pressure of the liquid in the circulation system to be such a condition that the organic solvent becomes to be easily vaporized, it is possible to more efficiently remove the organic solvent.

### <Advantageous effects>

With the composition X as described above, for the following reasons, water dispersion stability of the copolymer A is excellent, and at the same time, it is possible to obtain a water and oil proofing paper excellent in oil resistance.

The present inventors have found that even in a case where it is difficult to let the oil resistance be expressed like the internal addition of the water and oil proofing composition to a pulp slurry having a particularly high pH, excellent oil resistance and water dispersion stability can be exhibited by a fluorocopolymer which has units (a), units (b) and units (c) in the specific ratio, and of which the mass average molecular weight is from 80,000 to 300,000. First, they have found that by adjusting units (a) and units (b) to be in the specific ratio, such will contribute to the improvement of oil resistance in the pulp slurry with a high pH. This was considered to be due to both the high fluorine concentration and the low glass transition temperature. On the other hand, at that time, the proportion of the units (c) becomes to be relatively small, whereby the dispersion stability in water was found to be lowered. The present inventors have studied to solve the problem, and they have found it possible to maintain the dispersion stability in water by adjusting the mass average molecular weight of the fluorocopolymer to be within a specific range of from 80,000 to 300,000, and thus have arrived at the completion of the present invention.

### EXAMPLES

In the following, the present invention will be described in detail with reference to Examples and Comparative Examples, but the present invention is not limited thereto.

Ex. 1 to 8, 38 and 39 are Examples of the present invention, and Ex. 9 to 37 are Comparative Examples.

### (Appearance of fluorocopolymer solution)

The appearance of a fluorocopolymer solution was observed and evaluated by the following standards.

OK: It is liquid, and it is possible to proceed to the next step (water dispersion step, solvent removal step).

Gellation: It is gelled, and it is not possible to proceed to the next step.

### (Mass average molecular weight)

The mass average molecular weight (Mw) of the fluorocopolymer was measured under the following conditions.
Apparatus: manufactured by Tosoh Corporation, HLC-8320GPC,
Column: manufactured by Polymer Laboratories Ltd., MIXED-C 300×7.5 mm 5 µm,
Mobile phase: HCFC-225 (manufactured by Asahi Glass Company, Limited, ASAHIKLIN (registered trademark) AK-225)/tetrahydrofuran = 60/40 vol%,
Flow rate: 1.0 mL/min,
Oven temperature: 37°C,
Sample concentration: 1.0 mass%,
Injection volume: 50 µL,
Detector: RI,
Molecular weight standards: polymethyl methacrylates (Mp = 2136000, 955000, 569000, 332800, 121600, 67400, 31110, 13300, 7360, 1950, 1010, and 550).

### (Glass transition temperature)

Using DSC apparatus (manufactured by TA Instruments, Inc., DSC 100), the midpoint glass transition temperature of a fluorocopolymer was obtained in accordance with JIS K 7121-1987.

### (Appearance of water and oil proofing composition)

The appearance of a water and oil proofing composition after the solvent removal step, was visually observed and evaluated by the following standards.

OK: It is a liquid, and it is possible to proceed to the next step (processing to paper, performance evaluation).

NG: An insoluble polymer is precipitated, and it is not possible to proceed to the next step.

### (Oil resistance test)

A kit test was conducted by the following method in accordance with TAPPI T559cm-02 method. In the test, a test solution having castor oil, toluene and n-heptane mixed in a volume ratio as shown in Table 1 was used. The result of the test is represented by a kit number, and the larger the kit number, the better the oil resistance. By the kit test, the oil resistance of a test paper can be ascertained in a short time (approximately 20 seconds), and therefore, the kit test is widely used to evaluate the oil resistance of paper. The evaluation result has a meaning as an indicator for the surface tension of the surface of paper.

A test paper was placed on an unstained flat black surface, and one droplet of the test solution with kit number 12 was dropped from the height of 13 mm on the test paper. After 15 seconds (contact time: 15 seconds) from the dropping, the dropped test solution was removed with clean blotting paper, whereupon the surface of the test paper, to which the test solution was in contact, was visually observed. When the color of the surface was observed to be darker, the same operation was conducted by using the test solution with kit number 11, and in this way, the same operation was repeated while sequentially reducing the kit number, until the kit number was reached where the color of the surface no longer became darker. The evaluation was made by the first (largest) kit number where the color of the surface no longer became darker. In the case where the kit number is designated with a numerical value of less than a decimal point, such indicates that the evaluation is higher by the numerical value of less than a decimal point than the kit number. Further, in the case where the kit number is designated with a symbol "-", such indicates that the evaluation is slightly lower than the kit number, and in the case where the kit number is designated with a symbol "+", such indicates that the evaluation is slightly higher than the kit number.

**[Table 1]**

| Kit number | Mixed ratio (vol%) | | |
|---|---|---|---|
| | Castor oil | Toluene | n-Heptane |
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 50 | 50 |
| 12 | 0 | 45 | 55 |

(Monomer (a))

   C6FMA: CH₂=C(CH₃)C(O)OCH₂CH₂(CF₂)₆F
(Monomer (b))
   DMAEMA: dimethylaminoethyl methacrylate, CH₂=C(CH₃)C(O)OCH2CH₂N(CH₃)₂
(Monomer (c))
   HEA: 2-hydroxyethyl acrylate (but, containing 2% of diethylene glycol monoacrylate), CH₂=CHC(O)O(CH₂CH₂O)_{q}H (wherein q is from 1.00 to 1.03).
(Monomer (d))
   C6FA: CH₂=CHC(O)OCH₂CH₂(CF₂)₆F
   StA: stearyl acrylate.
   HEMA: 2-hydroxyethyl methacrylate (but, containing 2% of diethylene glycol monomethacrylate).
   PE350: polyethylene glycol monomethacrylate in which an average repeating number of ethylene glycol is about 8 (BLEMMER PE350, product name of NOF CORPORATION).
   DEAEMA: diethylaminoethyl methacrylate.
   3ED: triethylene glycol dimethacrylate.
   NVP: N-vinylpyrrolidone.

### (Chain transfer agent)

MPA: 3-mercaptopropionic acid.

### (Polymerization initiator)

V601: dimethyl 2,2'-azobis(2-methylpropionate) (manufactured by Wako Pure Chemical Industries, Ltd., V601).

PV: t-butyl peroxypivalate (manufactured by NOF CORPORATION, PERBUTYL PV).

### (Organic solvent)

MEK: methyl ethyl ketone.

### Acetone

### [Ex. 1 to 39]

### (Polymerization step)

In Ex. 1 to 38, a fluorocopolymer solution was obtained as follows.

Into a glass ampule container with a volume of about 120 mL, raw materials (monomers, polymerization initiator, chain transfer agent, organic solvent) in the proportions indicated in Tables 2 and 3 were charged for a total of 60 g, then nitrogen substitution was repeated three times, and the container was sealed with a rubber stopper. This was mounted in a constant temperature shaking water bath heated to the polymerization temperature shown in Tables 2 and 3, and by setting the number of shaking times to be 110 times per minutes, polymerization was conducted for a time as shown in Table 2 to Table 3, to obtain a fluorocopolymer solution. The appearance of the fluorocopolymer solution was confirmed. Further, the mass average molecular weight and glass transition temperature of the fluorocopolymer were obtained. The results are shown in Table 4.

In Ex. 39, a fluorocopolymer solution was obtained as follows.

Into a SUS steel pressure reactor vessel with a volume of about 1 L equipped with a stirrer, raw materials (monomers, organic solvent) other than a polymerization initiator, in the proportions shown in Table 3 were charged for a total of 600 g, then nitrogen substitution was repeated 3 times, and the vessel was sealed. Further, a polymerization initiator in the proportion shown in Table 3 was weighed in a separate 100 mL pressure vessel and was connected to the reactor vessel. While stirring with a stirrer at 200 rpm, the reactor was heated, and after confirming that the inner temperature was heated to 60°C, a polymerization initiator was pumped into the reactor by high pressure nitrogen. Thereafter, the reaction was conducted for 16 hours to obtain a fluorocopolymer solution. The appearance of the fluorocopolymer solution was visually confirmed. Further, the mass average molecular weight and glass transition temperature of the fluorocopolymer were obtained. The results are shown in Table 4.

### (Water dispersion step)

Into a 1 L four-necked flask equipped with a stirrer, water, an acid of the type as shown in Table 4, and, as the case requires, hydrogen peroxide, were charged and held at 70°C for 30 minutes. The amounts of water, acid and hydrogen peroxide shown in Table 4 are as follows.

Water: water in a mass 7 times the total mass of the monomers, chain transfer agent and polymerization initiator charged in the polymerization step.

Acetic acid: acetic acid in 1.5 equivalents of DEAEMA or DMAEMA.

Acetic acid+H₂O₂: in addition to the above-mentioned acetic acid, hydrogen peroxide in 2 equivalents of DEAEMA or DMAEMA.

The fluorocopolymer solution was added to the flask and stirred for 60 minutes at a rotation speed of 200 rpm, to obtain a water and oil proofing composition.

### (Solvent removal step)

In Ex. 1 to 37 and 39, using an evaporator, the organic solvent (acetone or MEK) and part of water were distilled off from the water and oil proofing composition, and ion-exchanged water was added to obtain a water and oil proofing composition in which the solid content concentration was 20 mass%. The appearance of the water and oil proofing composition was confirmed. The results are shown in Table 4. Here, the organic solvent amount in the obtained water and oil proofing composition was at most 1 mass% to the composition in each case.

In Ex. 38, in the solvent removal step, solvent removal was conducted by using an apparatus in which a sealed container was provided with a liquid outlet port to discharge the liquid in the liquid phase and a liquid inlet to introduce the liquid to the gas phase, the circulation system was made to be an external circulation system formed between the liquid outlet port and the liquid inlet, and the external circulation system had a means to adjust the temperature and pressure of the liquid flowing therein, whereby the organic solvent and part of water were distilled off from the water and oil proofing composition, and ion-exchanged water was added to obtain a water and oil proofing composition in which the solid content concentration was 20 mass%. The appearance of the water and oil proofing composition was confirmed. The results are shown in Table 4. Here, the organic solvent amount in the obtained water and oil proofing composition was at most 1 mass% to the composition.

### (Step for adding additives)

In Ex. 7, after the completion of the solvent removal step, DL-malic acid corresponding to 15% of the total mass of the monomer, chain transfer agent and initiator charged in the polymerization step, was further added, and ion-exchanged water was further added to obtain a water and oil proofing composition in which the solid content concentration was 20 mass%.

### (Production of water and oil proofing paper: neutral internal addition)

Commercially available LBKP (hardwood bleached kraft pulp) and NBKP (softwood bleached kraft pulp) were mixed in a mass ratio of 6:4, and then water was added so that the pulp concentration became 1 mass%, whereupon a pulp slurry was prepared by using a laboratory disintegrator. Using a 100 mesh wire (a wire mesh in which the number of holes per inch is 100), the slurry was concentrated until the pulp concentration became 10 mass%, and using a PFI mill (laboratory refiner), it was beaten to a freeness of 400 CSF. It was again diluted with water until the pulp concentration became 1 mass% and macerated for one minute by means of a laboratory disintegrator. The pH at that time was 7. While stirring this pulp slurry, AKD sizing agent (H-79, product name of Sorenisu Inc.) was added so that its solid content became to be 0.3 mass% to the mass of dried pulp, and after continuing the stirring for 3 minutes, the water and oil proofing composition was added so that its solid content became 0.2 mass% to the mass of dried pulp, whereupon stirring was further continued for 3 minutes. This pulp slurry was sheeted into paper by using a TAPPI standard handsheet machine so that the basis weight became to be 50 g/m². The sheeted wet paper was couched (dehydrated) and pressed (dehydrated) in accordance with JIS P 8222, and then dried at 100°C for 60 seconds using a cylinder dryer, to obtain a water and oil proofing paper. The water and oil proofing paper was humidified under standard conditions, and then subjected to an oil resistance test. The results are shown in Table 4.

### (Production of water and oil proofing paper: high pH internal addition)

The same treatment as the neutral internal addition was conducted to obtain a water and oil proofing paper, except that before starting addition of chemicals, the pH of 1 mass% pulp slurry was adjusted to from 9 to 10 by using sodium hydroxide. After humidifying the water and oil proofing paper under standard conditions, an oil resistance test was conducted. The results are shown in Table 4.

### (Production of water and oil proofing paper: external addition)

The water and oil proofing composition was diluted by tap water so that the solid content became to be 0.3 mass%, to prepare 100 mL of a test solution.

As base paper, base paper of 15 cm × 25 cm (LBKP/NBKP = 70/30 mass ratio, no internal addition agent was used) with a basis weight of 60 g/m² was prepared.

Using a two-roll size press (manufactured by Mathis Co.), the test solution was applied to the base paper under conditions of 4 bar and 3 m/min so that the applied amount became to be from 55 to 65 g/m². It was dried and heated at 105°C for 1 minute to obtain a water and oil proofing paper. After humidifying the water and oil proofing paper under standard conditions, an oil resistance test was conducted. The results are shown in Table 4.

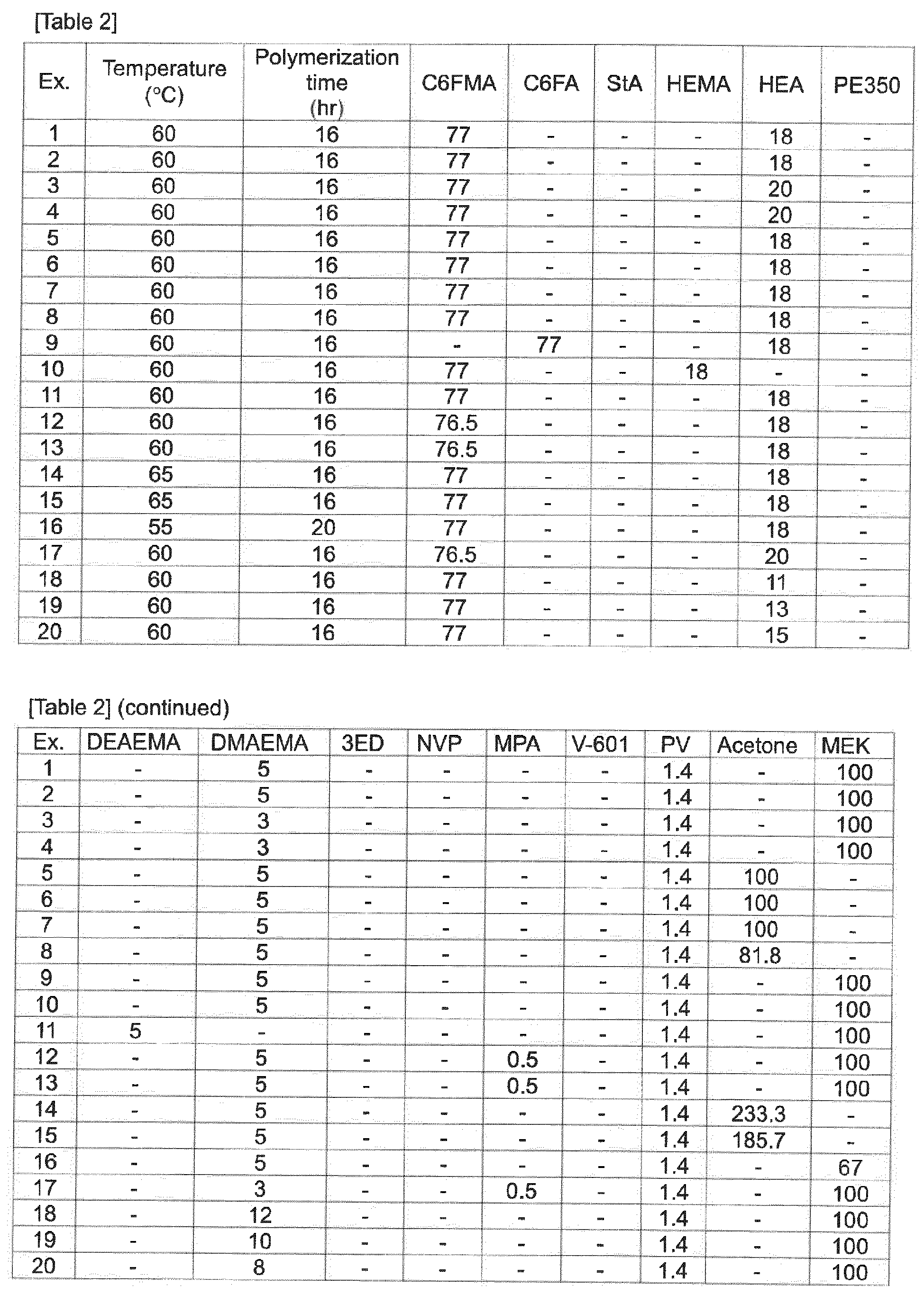

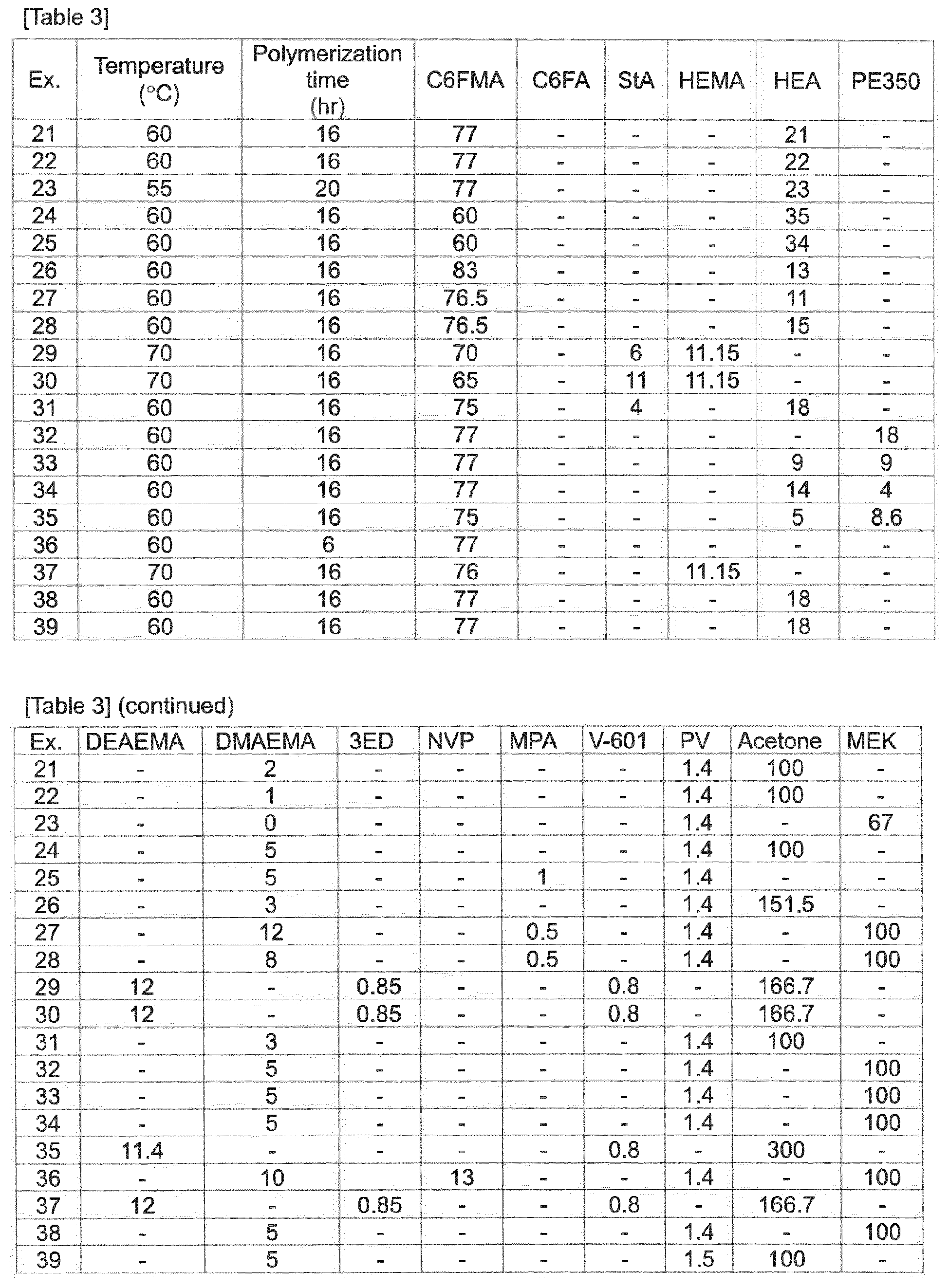

**[Table 4]**

| Ex. | Fluorocopolymer solution | | | Water dispersion step | Water and oil proofing composition | | | |
|---|---|---|---|---|---|---|---|---|
| | Appearance | Mw | Glass transition temperature (°C) | | Appearance | Oil resistance test | | |
| | | | | | | Neutral internal addition | High pH internal addition | External addition |
| 1 | OK | 149472 | 25 | Acetic acid | OK | 4 | 4 | 7 |
| 2 | OK | 149472 | 25 | Acetic acid+H₂O₂ | OK | 4- | 4 | 7 |
| 3 | OK | 143670 | 24 | Acetic acid | OK | 4 | 4 | 6.5 |
| 4 | OK | 143670 | 24 | Acetic acid+H₂O₂ | OK | 4 | 4+ | 7 |
| 5 | OK | 128464 | 27 | Acetic acid+H₂O₂ | OK | 4 | 4 | 6.5 |
| 6 | OK | 128464 | 27 | Acetic acid | OK | 4 | 4 | 6.5 |
| 7 | OK | 128464 | 27 | Acetic acid | OK | 4 | 4 | 6.5 |
| 8 | OK | 165247 | 24 | Acetic acid | OK | 4- | 4 | 6.5 |
| 9 | OK | - | - | Acetic acid | NG | Impossible to evaluate | Impossible to evaluate | Impossible to evaluate |
| 10 | OK | - | - | Acetic acid | NG | Impossible to evaluate | Impossible to evaluate | Impossible to evaluate |
| 11 | OK | - | - | Acetic acid | NG | Impossible to evaluate | Impossible to evaluate | Impossible to evaluate |
| 12 | OK | 54781 | - | Acetic acid | OK | 3.5 | 3.5 | 6.25 |
| 13 | OK | 54781 | - | Acetic acid+H₂O₂ | OK | 3.5 | 3.5 | 6 |
| 14 | OK | 42187 | 22 | Acetic acid | OK | 3- | 3- | 6 |
| 15 | OK | 69336 | - | Acetic acid | OK | 3 | 3 | 6 |
| 16 | OK | 323465 | 28 | Acetic acid+H₂O₂ | OK | 3.5 | 3.5 | 6.25 |
| 17 | OK | 58712 | - | Acetic acid | OK | 3+ | 3.5 | 6 |
| 18 | OK | 103854 | - | Acetic acid | OK | 3 | 3 | 6.5 |
| 19 | OK | 109457 | - | Acetic acid | OK | 3 | 2.5 | 6.5 |
| 20 | OK | 116166 | - | Acetic acid | OK | 3+ | 3 | 6.5 |
| 21 | OK | 129295 | - | Acetic acid | OK | 3 | 3 | 6 |
| 22 | OK | 126558 | - | Acetic acid | OK | 2 | 2 | 5.5 |
| 23 | OK | 145980 | - | Acetic acid | NG | Impossible to evaluate | Impossible to evaluate | Impossible to evaluate |
| 24 | Gelled | - | - | Not conducted | NG | Impossible to evaluate | Impossible to evaluate | Impossible to evaluate |
| 25 | OK | 58589 | - | Acetic acid | OK | 2- | 1 | 3 |
| 26 | OK | - | - | Acetic acid | NG | Impossible to evaluate | Impossible to evaluate | Impossible to evaluate |
| 27 | OK | 48243 | - | Acetic acid+H₂O₂ | OK | 3+ | 4- | 0.75 |
| 28 | OK | 43382 | - | Acetic acid+H₂O₂ | OK | 3.5 | 4 | 1 |
| 29 | OK | 74195 | - | Acetic acid | OK | 2 | 1.5 | 5.5 |
| 30 | OK | 73440 | - | Acetic acid | OK | 2 | 1.5 | 4.5 |
| 31 | OK | - | - | Acetic acid | NG | Impossible to evaluate | Impossible to evaluate | Impossible to evaluate |
| 32 | Gelled | - | - | Not conducted | Not conducted | Impossible to evaluate | Impossible to evaluate | Impossible to evaluate |
| 33 | Gelled | - | - | Not conducted | Not conducted | Impossible to evaluate | Impossible to evaluate | Impossible to evaluate |
| 34 | Gelled | - | - | Not conducted | Not conducted | Impossible to evaluate | Impossible to evaluate | Impossible to evaluate |
| 35 | OK | 74323 | - | Acetic acid | OK | 1 | 1 | 3 |
| 36 | OK | - | - | Acetic acid | OK | 3 | 0 | 6 |
| 37 | OK | 73490 | 54 | Acetic acid | OK | 3 | 0 | 5.5 |
| 38 | OK | 149472 | 25 | Acetic acid | OK | 4 | 4 | 7 |
| 39 | OK | 97872 | 26 | Acetic acid | OK | 4 | 4 | 7 |

Ex. 9 is an example in which C6FA was used instead of C6FMA as the monomer (a), Ex. 10 is an example in which DEAEMA was used instead of DMAEMA as the monomer (b), and Ex. 11 is an example in which HEMA was used instead of HEA as the monomer (c). In the water and oil proofing composition, the water dispersion stability was poor, and no evaluation was possible as a water and oil proofing composition for paper.

Ex. 12 to 17 are examples in which the mass average molecular weight is outside the range of from 80,000 to 300,000. The water and oil proofing paper was poor in oil resistance.

Ex. 18 to 20 are examples in which units (b) are many and units (c) are less. The water and oil proofing paper was poor in oil resistance.

Ex. 21 is an example in which units (b) are less, and Ex. 22 is an example in which units (b) are less and units (c) are many. The water and oil proofing paper was poor in oil resistance.

Ex. 23 is an example in which no units (b) are present. In the water and oil proofing composition, the water dispersion stability was poor, and no evaluation was possible as a water and oil proofing composition for paper.

Ex. 24 and 25 are examples in which units (a) are too little, and units (c) are too much. In Ex. 24, the fluorocopolymer solution was gelled, no evaluation was possible as a water and oil proofing composition for paper. In Ex. 25, water dispersion was possible, but the water and oil proofing paper was inferior in oil resistance.

Ex. 26 is an example in which units (a) are many. The water dispersion stability was poor, whereby no evaluation was possible as a water and oil proofing composition for paper.

Ex. 27 and 28 are examples in which units (b) are many, units (c) are less, and the mass average molecular weight is low. The water and oil proofing paper was poor in oil resistance.

Ex. 29 to 31 are examples having units based on a monomer having a long-chain alkyl group. In Ex. 29 and 30, the water and oil proofing paper was inferior in oil resistance. In Ex. 31, in the water and oil proofing composition, the water dispersion stability was poor, whereby no evaluation was possible as a water and oil proofing composition for paper.

Ex. 32 to 35 are examples having units based on a monomer represented by the formula (4). In Ex. 32 to 34, the fluorocopolymer solution was gelled and no evaluation was possible as a water and oil proofing composition for paper. In Ex. 35, the water and oil proofing paper was inferior in oil resistance.

Ex. 36 is an example corresponding to an Example described in WO 2011/021619. Ex. 37 is an example corresponding to an Example described in WO 2005/090423. The water and oil proofing paper was poor in oil resistance.

### INDUSTRIAL APPLICABILITY

A water and oil proofing paper treated with the water and oil proofing composition for paper of the present invention is useful as a food packaging container, a food packaging paper, a freshness-keeping agent wrapping paper, a deoxidizer packaging paper, etc.

## Claims

1. A water and oil proofing composition for paper, which is a composition comprising water and a salified fluorocopolymer dispersed in the water, **characterized in that**
the fluorocopolymer before being salified, is a copolymer which has units based on the following monomer (a), units based on the following monomer (b) and units based on the following monomer (c), which comprises from 74 to 80 mass% of units based on the following monomer (a), from 3 to 5 mass% of units based on the following monomer (b) and from 17 to 21 mass% of units based on the following monomer (c), in all monomer units, and of which the mass average molecular weight is from 80,000 to 300,000:
Monomer (a): a compound represented by the following formula (1),
CH₂=C(CH₃)C(O)OCH₂CH₂(CF₂)₆F (1),
Monomer (b): a compound represented by the following formula (2),
CH₂=C(CH₃)C(O)OCH2CH₂N(CH₃)₂ (2),
Monomer (c): a compound represented by the following formula (3),
CH₂=CHC(O)OCH₂CH₂OH (3),
and the salified fluorocopolymer is the above copolymer in which at least some of dimethylamino groups in units based on the above monomer (b) are salified by an acid.

2. The composition according to Claim 1, wherein the fluorocopolymer before being salified has no units based on a monomer having an alkyl group with at least 4 carbon atoms.

3. The composition according to Claim 1 or 2, wherein the fluorocopolymer before being salified, is a copolymer which comprises from 75 to 79 mass% of units based on the monomer (a), from 3 to 5 mass% of units based on the monomer (b) and from 18 to 20 mass% of units based on the monomer (c).

4. The composition according to any one of Claims 1 to 3, wherein the glass transition temperature of the fluorocopolymer before being salified, is at most 50°C.

5. The composition according to any one of Claims 1 to 4, wherein the content of an organic solvent in the composition is at most 30 mass% in the total amount of the composition.

6. The composition according to any one of Claims 1 to 5, wherein the fluorocopolymer has no units based on a monomer represented by the following monomer (4):
CH₂=C(R¹)-G-(R²O)_{q}-R³ (4)
wherein R¹ is a hydrogen atom or a methyl group; G is a group represented by the following formula (5-1) or formula (5-2); R² is an alkylene group with from 2 to 4 carbon atoms, and two or more alkylene groups different in the number of carbon atoms may be contained in one molecule; q is an integer of from 3 to 50; R³ is a hydrogen atom, a methyl group, an acryloyl group, a methacryloyl group or an allyl group;
-C(O)O-(CH₂)ᵣ- (5-1)
-C(O)O-(CH₂)ᵣ-NHC(O)O- (5-2)
wherein r is an integer of from 0 to 4.

7. The composition according to any one of Claims 1 to 6, wherein the fluorocopolymer has no units based on a monomer having a group reactive with a hydroxy group.

8. The composition according to any one of Claims 1 to 7, wherein the composition contains no compound having a group reactive with a hydroxy group.

9. A water and oil proofing paper made of a paper obtained from a pulp slurry to which the composition as defined in any one of Claims 1 to 8 is added.

10. A water and oil proofing paper made of a paper treated with the composition as defined in any one of Claims 1 to 8.

11. A method for producing a water and oil proofing paper, **characterized by** making a paper by adding to a pulp slurry the composition as defined in any one of Claims 1 to 8.

12. A method for producing a water and oil proofing paper, **characterized by** applying the composition as defined in any one of Claims 1 to 8 to the surface of a paper, followed by drying.

13. A method for producing a water and oil proofing composition for paper, **characterized by**
polymerizing a monomer mixture comprising from 74 to 80 mass% of the following monomer (a), from 3 to 5 mass% of the following monomer (b) and from 17 to 21 mass% of the following monomer (c), in an organic solvent, to produce an organic solvent solution of a fluorocopolymer, of which the mass average molecular weight is from 80,000 to 300,000,
then, mixing an acid and water to the obtained organic solvent solution of the fluorocopolymer, to salify at least some of dimethylamino groups in units based on the monomer (b) in the fluorocopolymer, by the acid,
further removing the organic solvent from the mixture containing the salified fluorocopolymer, the organic solvent and water, to obtain a composition comprising water and the salified fluorocopolymer dispersed in the water:
Monomer (a): a compound represented by the following formula (1),
CH₂=C(CH₃)C(O)OCH₂CH₂(CF₂)₆F (1),
Monomer (b): a compound represented by the following formula (2),
CH₂=C(CH₃)C(O)OCH2CH₂N(CH₃)₂ (2),
Monomer (c): a compound represented by the following formula (3),
CH₂=CHC(O)OCH₂CH₂OH (3).

14. The production method according to Claim 13, which comprises
filling a closed container having a gas outlet, with the mixture containing the salified fluorocopolymer, the organic solvent and water, to form a liquid phase and a gas phase in the closed container,
then, forming a part of the liquid in the liquid phase into small droplets and bringing the small droplets into contact with the gas phase, to vaporize the organic solvent in the small droplets, and discharging the gas in the gas phase containing the vaporized organic solvent, from the gas outlet of the closed container, to remove the organic solvent in the liquid phase.

## Patentansprüche

1. Wasser- und ölabweisende Zusammensetzung für Papier, die eine Zusammensetzung ist, die Wasser und ein in Salz überführtes Fluorcopolymer, das in dem Wasser dispergiert ist, umfasst, **dadurch gekennzeichnet, dass**
das Fluorcopolymer, bevor es in ein Salz überführt ist, ein Copolymer ist, das Einheiten basierend auf dem nachstehenden Monomer (a), Einheiten basierend auf dem nachstehenden Monomer (b) und Einheiten basierend auf dem nachstehenden Monomer (c) aufweist, welches von 74 bis 80 Massen% an Einheiten basierend auf dem nachstehenden Monomer (a), von 3 bis 5 Massen% an Einheiten basierend auf dem nachstehenden Monomer (b) und von 17 bis 21 Massen% an Einheiten basierend auf dem nachstehenden Monomer (c), in allen Monomereinheiten, umfasst, und dessen massengemitteltes Molekulargewicht von 80.000 bis 300.000 beträgt:
Monomer (a): eine Verbindung, dargestellt durch die nachstehende Formel (1),
CH₂=C(CH₃)C(O)OCH₂CH₂(CF₂)₆F (1),
Monomer (b): eine Verbindung, dargestellt durch die nachstehende Formel (2),
CH₂=C(CH₃)C(O)OCH₂CH₂N(CH₃)₂ (2),
Monomer (c): eine Verbindung, dargestellt durch die nachstehende Formel (3),
CH₂=CHC(O)OCH₂CH₂OH (3),
und das in ein Salz überführte Fluorcopolymer das obige Copolymer ist, in dem mindestens einige der Dimethylaminogruppen in Einheiten basierend auf dem vorstehenden Monomer (b) durch eine Säure in ein Salz überführt sind.

2. Zusammensetzung nach Anspruch 1, wobei das Fluorcopolymer, bevor es in ein Salz überführt ist, keine Einheiten basierend auf einem Monomer mit einer Alkylgruppe mit mindestens 4 Kohlenstoffatomen aufweist.

3. Zusammensetzung nach Anspruch 1 oder 2, wobei das Fluorcopolymer, bevor es in ein Salz überführt ist, ein Copolymer ist, das von 75 bis 79 Massen% an Einheiten basierend auf dem Monomer (a), von 3 bis 5 Massen% an Einheiten basierend auf dem Monomer (b) und von 18 bis 20 Massen% an Einheiten basierend auf dem Monomer (c), umfasst.

4. Zusammensetzung nach einem der Ansprüche 1 bis 3, wobei die Glasübergangstemperatur des Fluorcopolymers, bevor es in ein Salz überführt ist, höchstens 50°C beträgt.

5. Zusammensetzung nach einem der Ansprüche 1 bis 4, wobei der Gehalt an einem organischen Lösungsmittel in der Zusammensetzung höchstens 30 Massen% in der Gesamtmenge der Zusammensetzung beträgt.

6. Zusammensetzung nach einem der Ansprüche 1 bis 5, wobei das Fluorcopolymer keine Einheiten basierend auf einem Monomer, dargestellt durch das nachstehende Monomer (4), aufweist:
CH₂=C(R¹)-G-(R²O)_{q}-R³ (4)
wobei R¹ ein Wasserstoffatom oder eine Methylgruppe ist; G eine Gruppe ist, die durch die nachstehende Formel (5-1) oder Formel (5-2) dargestellt wird; R² eine Alkylengruppe mit 2 bis 4 Kohlenstoffatomen ist und zwei oder mehr Alkylengruppen mit unterschiedlicher Anzahl von Kohlenstoffatomen in einem Molekül enthalten sein können; q eine ganze Zahl von 3 bis 50 ist; R³ ein Wasserstoffatom, eine Methylgruppe, eine Acryloylgruppe, eine Methacryloylgruppe oder eine Allylgruppe ist;
-C(O)O-(CH₂)ᵣ- (5-1)
-C(O)O-(CH₂)ᵣ-NHC(O)O- (5-2)
wobei r eine ganze Zahl von 0 bis 4 ist.

7. Zusammensetzung nach einem der Ansprüche 1 bis 6, wobei das Fluorcopolymer keine Einheiten basierend auf einem Monomer mit einer Gruppe, die gegenüber einer Hydroxygruppe reaktiv ist, aufweist.

8. Zusammensetzung nach einem der Ansprüche 1 bis 7, wobei die Zusammensetzung keine Verbindung enthält, die eine Gruppe aufweist, die gegenüber einer Hydroxygruppe reaktiv ist.

9. Wasser- und ölabweisendes Papier, hergestellt aus einem Papier, das aus einer Zellstoffaufschlämmung erhalten wurde, der die Zusammensetzung nach einem der Ansprüche 1 bis 8 zugesetzt ist.

10. Wasser- und ölabweisendes Papier, hergestellt aus einem Papier, das mit der Zusammensetzung nach einem der Ansprüche 1 bis 8 behandelt wird.

11. Verfahren zur Herstellung eines wasser- und ölabweisendes Papiers, **gekennzeichnet durch** das Herstellen eines Papiers durch Hinzufügen der Zusammensetzung nach einem der Ansprüche 1 bis 8 zu einer Zellstoffaufschlämmung.

12. Verfahren zur Herstellung eines wasser- und ölabweisendes Papiers, **gekennzeichnet durch** das Aufbringen der Zusammensetzung nach einem der Ansprüche 1 bis 8 auf die Oberfläche eines Papiers, gefolgt von Trocknen.

13. Verfahren zur Herstellung einer wasser- und ölabweisenden Zusammensetzung für Papier, **gekennzeichnet durch**
das Polymerisieren eines Monomergemisches, das von 74 bis 80 Massen% des nachstehenden Monomers (a), von 3 bis 5 Massen% des nachstehenden Monomers (b) und von 17 bis 21 Massen% des nachstehenden Monomers (c) umfasst, in einem organischen Lösungsmittel, um eine organische Lösungsmittellösung eines Fluorcopolymers herzustellen, dessen massengemitteltes Molekulargewicht von 80.000 bis 300.000 beträgt,
das anschließende Mischen einer Säure und Wasser zu der erhaltenen organischen Lösungsmittellösung des Fluorcopolymers, um mindestens einige der Dimethylaminogruppen in Einheiten basierend auf dem Monomer (b) in dem Fluorcopolymer durch die Säure in ein Salz zu überführen,
weiter das Entfernen des organischen Lösungsmittels aus dem Gemisch, welches das in ein Salz überführte Fluorcopolymer, das organische Lösungsmittel und Wasser enthält, um eine Zusammensetzung zu erhalten, die Wasser und das in ein Salz überführte Fluorcopolymer, dispergiert in dem Wasser, umfasst:
Monomer (a): eine Verbindung, dargestellt durch die nachstehende Formel (1),
CH₂=C(CH₃)C(O)OCH₂CH₂(CF₂)₆F (1),
Monomer (b): eine Verbindung, dargestellt durch die nachstehende Formel (2),
CH₂=C(CH₃)C(O)OCH₂CH₂N(CH₃)₂ (2),
Monomer (c): eine Verbindung, dargestellt durch die nachstehende Formel (3),
CH₂=CHC(O)OCH₂CH₂OH (3).

14. Herstellungsverfahren nach Anspruch 13, das
das Befüllen eines geschlossenen Behälters mit einem Gasauslass mit dem Gemisch, welches das in ein Salz überführte Fluorcopolymer, das organische Lösungsmittel und Wasser enthält, um eine flüssige Phase und eine Gasphase in dem geschlossenen Behälter zu bilden,
dann das Formen eines Teils der Flüssigkeit in der flüssigen Phase in kleine Tröpfchen und das Inkontaktbringen der kleinen Tröpfchen mit der Gasphase, um das organische Lösungsmittel in den kleinen Tröpfchen zu verdampfen, und das Ablassen des Gases in der Gasphase, die das verdampfte organische Lösungsmittel enthält, aus dem Gasauslass des geschlossenen Behälters, um das organische Lösungsmittel in der flüssigen Phase zu entfernen.

## Revendications

1. Composition d'imperméabilisation à l'eau et à l'huile destinée à du papier, qui est une composition comprenant de l'eau et un fluorocopolymère salifié dispersé dans l'eau, **caractérisée en ce que**
le fluorocopolymère, avant d'être salifié, est un copolymère qui comporte des unités à base du monomère (a) suivant, des unités à base du monomère (b) suivant et des unités à base du monomère (c) suivant, qui comprend de 74 à 80 % en masse d'unités à base du monomère (a) suivant, de 3 à 5 % en masse d'unités à base du monomère (b) suivant et de 17 à 21 % en masse d'unités à base du monomère (c) suivant, dans toutes les unités monomères et dont le poids moléculaire moyen en masse est compris entre 80 000 et 300 000 :
monomère (a) : un composé représenté par la formule (1) suivante,
CH₂=C(CH₃)C(O)OCH₂CH₂(CF₂)₆F (1),
monomère (b) : un composé représenté par la formule (2) suivante,
CH₂=C(CH₃)C(O)OCH2CH₂N(CH₃)₂ (2),
monomère (c) : un composé représenté par la formule (3) suivante,
CH₂=CHC(O)OCH₂CH₂OH (3),
et le fluorocopolymère salifié est le copolymère précédent dans lequel au moins une partie de groupes diméthylamino dans les unités à base du monomère (b) précédent est salifiée par un acide.

2. Composition selon la revendication 1, dans laquelle le fluorocopolymère, avant d'être salifié, ne comporte aucune unité à base d'un monomère comportant un groupe alkyle avec au moins 4 atomes de carbone.

3. Composition selon la revendication 1 ou 2, dans laquelle le fluorocopolymère, avant d'être salifié, est un copolymère qui comprend de 75 à 79 % en masse d'unités à base du monomère (a), de 3 à 5 % en masse d'unités à base du monomère (b) et de 18 à 20 % en masse d'unités à base du monomère (c).

4. Composition selon l'une quelconque des revendications 1 à 3, dans laquelle la température de transition vitreuse du fluorocopolymère avant d'être salifié, est inférieure ou égale à 50°C.

5. Composition selon l'une quelconque des revendications 1 à 4, dans laquelle la teneur en solvant organique dans la composition est inférieure ou égale à 30 % en masse de la masse totale de la composition.

6. Composition selon l'une quelconque des revendications 1 à 5, dans laquelle le fluorocopolymère ne comporte pas d'unité à base d'un monomère représenté par le monomère (4) suivant :
CH₂=C(R1)-G-(R2O)_{q}-R3 (4)
dans laquelle R1 représente un atome d'hydrogène ou un groupe méthyle ; G est un groupe représenté par la formule (5-1) ou la formule (5-2) suivante ; R2 représente un groupe alkylène avec de 2 à 4 atomes de carbone, et deux ou plusieurs groupes alkylènes présentant un nombre d'atomes de carbone différents peuvent être contenus dans une molécule ; q est un entier compris entre 3 et 50 ; R3 représente un atome d'hydrogène, un groupe méthyle, un groupe acryloyle, un groupe méthacryloyle ou un groupe allyle ;
-C(O)O-(CH₂)ᵣ- (5-1)
-C(O)O-(CH₂)ᵣ-NHC(O)O- (5-2)
dans lesquelles r est un entier compris entre 0 et 4.

7. Composition selon l'une quelconque des revendications 1 à 6, dans laquelle le fluorocopolymère ne comporte pas d'unité à base d'un monomère comportant un groupe réagissant avec un groupe hydroxy.

8. Composition selon l'une quelconque des revendications 1 à 7, dans laquelle la composition ne contient aucun composé comportant un groupe réagissant avec un groupe hydroxy.

9. Papier d'imperméabilisation à l'eau et à l'huile réalisé en un papier obtenu à partir d'une pâte à papier à laquelle la composition selon l'une quelconque des revendications 1 à 8 est ajoutée.

10. Papier d'imperméabilisation à l'eau et à l'huile réalisé en un papier traité avec la composition selon l'une quelconque des revendications 1 à 8.

11. Procédé de production de papier d'imperméabilisation à l'eau et à l'huile, **caractérisé par** la réalisation d'un papier en ajoutant à une pâte à papier la composition selon l'une quelconque des revendications 1 à 8.

12. Procédé de production de papier d'imperméabilisation à l'eau et à l'huile, **caractérisé par** l'application de la composition selon l'une quelconque des revendications 1 à 8 sur la surface d'une feuille de papier, suivie par un séchage.

13. Procédé de production d'une composition d'imperméabilisation à l'eau et à l'huile destinée à du papier, **caractérisé par**
la polymérisation d'un mélange de monomères comprenant de 74 à 80 % en masse du monomère (a) suivant, de 3 à 5 % en masse du monomère (b) suivant et de 17 à 21 % en masse du monomère (c) suivant, dans un solvant organique, afin de produire une solution de solvant organique d'un fluorocopolymère, dont le poids moléculaire moyen en masse est compris entre 80 000 et 300 000,
puis, le mélange d'un acide et d'eau à la solution de solvant organique obtenue du fluorocopolymère, afin de salifier au moins certains groupes diméthylamino en unités à base du monomère (b) dans le fluorocopolymère, avec l'acide,
l'élimination supplémentaire du solvant organique à partir du mélange contenant le fluorocopolymère salifié, le solvant organique et l'eau afin d'obtenir une composition comprenant de l'eau et le fluorocopolymère salifié dispersé dans l'eau :
monomère (a) : un composé représenté par la formule (1) suivante,
CH₂=C(CH₃)C(O)OCH₂CH₂(CF₂)₆F (1),
monomère (b) : un composé représenté par la formule (2) suivante,
CH₂=C(CH₃)C(O)OCH2CH₂N(CH₃)₂ (2),
monomère (c) : un composé représenté par la formule (3) suivante,
CH₂=CHC(O)OCH₂CH₂OH (3).

14. Procédé de production selon la revendication 13, qui comprend
le remplissage d'un conteneur fermé comportant une sortie de gaz, avec le mélange contenant le fluorocopolymère salifié, le solvant organique et l'eau afin de former une phase liquide et une phase gazeuse dans le conteneur fermé,
puis, la mise en forme d'une partie du liquide de la phase liquide en fines gouttelettes et la mise en contact des fines gouttelettes avec la phase gazeuse, afin de vaporiser le solvant organique sur les fines gouttelettes, et le déchargement du gaz dans la phase gazeuse contenant le solvant organique vaporisé, à partir de la sortie de gaz du conteneur fermé, de manière à éliminer le solvant organique dans la phase liquide.
